Europäisches Patentamt

European Patent Office

Office européen des brevets

(19)

(11)  EP 1 737 173 A2

(12)  EUROPEAN PATENT APPLICATION

(43) Date of publication:
    27.12.2006  Bulletin 2006/52

(51) Int Cl.:
    *H04L 25/02* (2006.01)    *H04L 27/26* (2006.01)

(21) Application number: 06251652.1

(22) Date of filing: 28.03.2006

(84) Designated Contracting States:
    AT BE BG CH CY CZ DE DK EE ES FI FR GB GR
    HU IE IS IT LI LT LU LV MC NL PL PT RO SE SI
    SK TR
    Designated Extension States:
    AL BA HR MK YU

(30) Priority: 20.06.2005  JP 2005179093

(71) Applicants:
    • FUJITSU LIMITED
     Kawasaki-shi,
     Kanagawa 211-8588 (JP)
    • NEC CORPORATION
     Minato-ku,
     Tokyo 108-8001 (JP)

(72) Inventors:
    • Seki, Hiroyuki,
     c/o Fujitsu Limited
     Kawasaki-shi,
     Kanagawa, 211-8588 (JP)
    • Jitsukawa, Daisuke,
     c/o Fujitsu Limited
     Kawasaki-shi,
     Kanagawa, 211-8588 (JP)

    • Shiizaki, Kotaro,
     c/o Fujitsu Limited
     Kawasaki-shi,
     Kanagawa, 211-8588 (JP)
    • Kawai, Hiroyuki,
     c/o NTT DoCoMo, Inc.
     Tokyo 100-6150 (JP)
    • Kakura, Yoshihazu,
     c/o NEC Corporation
     Tokyo 108-8001 (JP)
    • Takamichi, Toru,
     c/o NEC Corporation
     Tokyo 108-8001 (JP)
    • Koyanagi, Kenji,
     c/o NEC Corporation
     Tokyo 108-8001 (JP)

(74) Representative: Stebbing, Timothy Charles
    Haseltine Lake,
    Imperial House,
    15-19 Kingsway
    London WC2B 6UD (GB)

(54)  **Receiver for orthogonal frequency division multiplexing transmission**

(57)  In the present application, channel estimation values calculated based on pilot symbols can be used for channel compensation of data symbols in an OFDM receiver, even in cases where FFT extract position differs for each frame. The OFDM receiver comprises a circuit (102) which calculates the amount of phase rotation that is generated by the difference in timing at which the individual symbols are extract as objects of a fast Fourier transform when the fast Fourier transform processing is performed by a fast Fourier transform circuit (10), and further a circuit (105-107) which corrects the amount of phase rotation of the channel estimation value determined by a channel estimating circuit (101).

FIG. 5

EP 1 737 173 A2

**Description**

This application is based upon and claims the benefit of priority from the prior Japanese Patent Application No. 2005-179093, filed on June 20, 2005.

The present invention relates to a receiver for orthogonal frequency division multiplexing transmission, and more particularly to a receiver for orthogonal frequency division multiplexing transmission which allows high-precision channel estimation.

Orthogonal frequency division multiplexing (OFDM) transmission systems which make it possible to maximize the frequency utilization efficiency are used in wireless communications systems that aim at high-speed data communications.

In the case of orthogonal frequency division multiplexing (hereafter referred to simply as "OFDM") transmission systems, the band that is used is divided into a plurality of subcarriers, and transmission is performed with the respective bits of the data assigned to the respective subcarriers. Since the subcarriers are disposed so that these subcarriers are orthogonal to each other on the frequency axis, this system is superior in terms of the frequency utilization efficiency.

Furthermore, since the individual subcarriers are narrowband signals, the effects of multi-path interference can be suppressed, so that high-speed data communications can be realized.

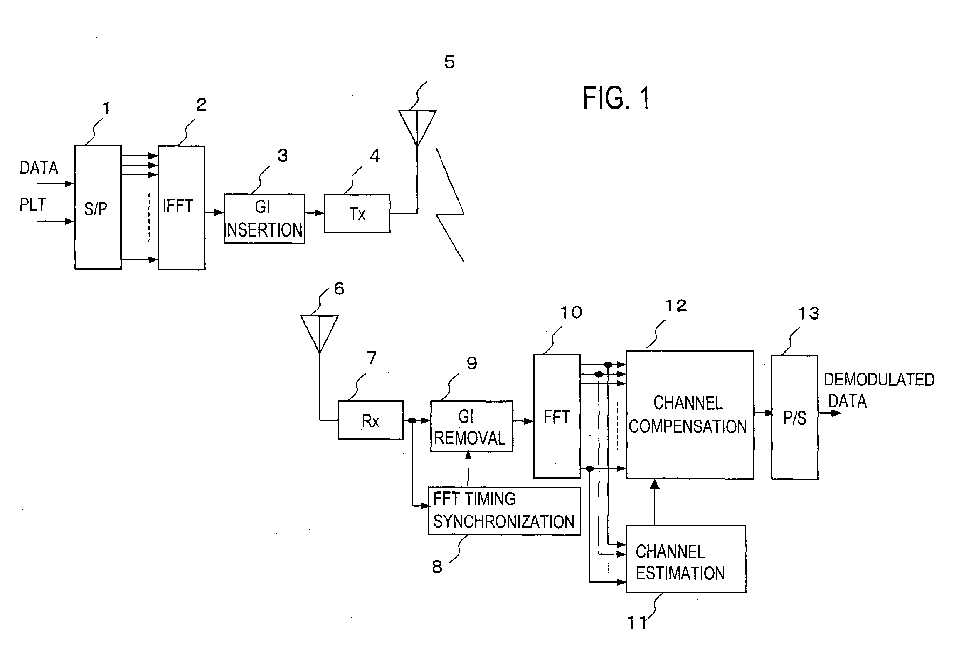

Fig. 1 is a diagram which shows an outline of an OFDM wireless communications system. In Fig. 1, transmission data that is input into the transmitter is converted into parallel signals by an S/P converter 1, and these signals are assigned to respective subcarriers.

Next, an inverse fast Fourier transform (IFFT) processing is performed by means of an IFFT converter 2, so that the signals are converted into time domain signals. Following this conversion into time domain signals, guard intervals (GI) are inserted for each symbol by means of a guard interval (GI) insertion circuit 3.

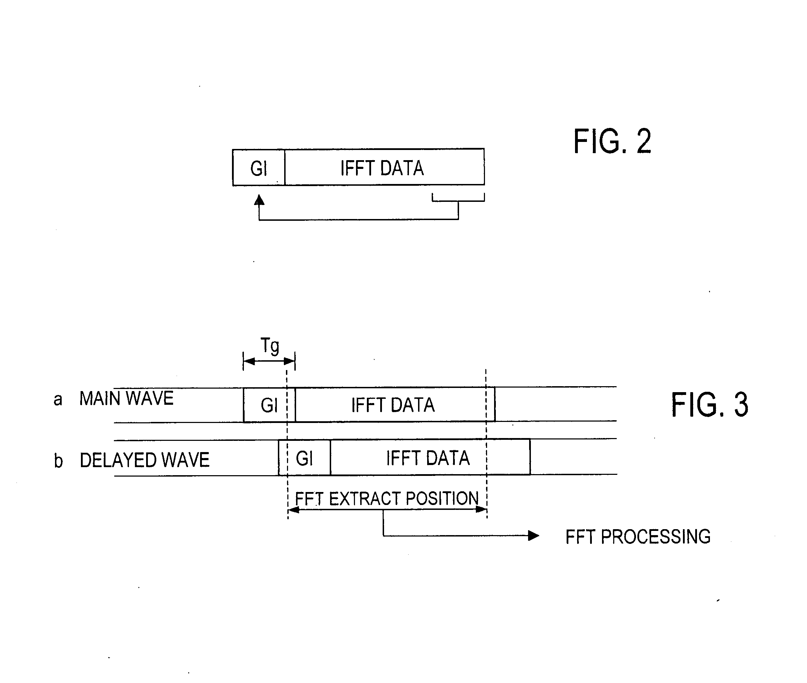

Here, as is shown in Fig. 2, the guard intervals (GI) copy the portion of a specified period at the end of the OFDM symbols, and are disposed at the head. As a result of the insertion of these guard intervals (GI), as is shown in Fig. 3, the orthogonality can be maintained so that multi-path effects can be prevented as long as the arrival of the delayed wave b caused by the multi-path is within the period Tg of the guard interval (GI) with respect to the main wave, i.e., the direct wave a.

Returning now to Fig. 1, the base band signal following GI insertion is converted into a radio frequency (RF) in a transmission circuit (Tx) 4, and is transmitted from a transmitting antenna 5.

Furthermore, in cases where multi-carrier transmission such as OFDM or the like is used, high-precision channel estimation is necessary for each subcarrier. Accordingly, in the transmitter, known pilot signals used for channel estimation in the receiver are inserted at fixed intervals.

The signal that is output from the transmitting antenna 5 is received by the receiving antenna 6 of the receiver via a multi-path fading channel. The received radio signal is converted into a base band signal by a receiver circuit (Rx) 7. For the signal converted into a base band, the detection of the FFT extract position is performed in an FFT timing synchronizing circuit 8.

Then, as is shown in Fig. 3, FFT processing region is extracted for each symbol (with the guard intervals (GI) excluded) from the base band signal in a GI removal circuit 9 in accordance with the FFT timing detected by the FFT timing synchronizing circuit 8. The extracted FFT region are subjected to a fast Fourier transform (FFT) processing by the fast Fourier transform (FFT) circuit 10, and are thus converted into subcarrier signals in the frequency domain.

In the channel estimating part 11, the correlation between pilot symbols received at fixed intervals and a known pilot pattern is calculated, so that channel estimation is performed for each subcarrier. In the channel compensation circuit 12, compensation is made for the channel fluctuations in the data symbols using the channel estimation values obtained by the channel estimating part 11. Finally, the data is rearranged as series data by a P/S converter 13, so that the original transmission data is demodulated.

Here, the relationship between the FFT timing for the GI removal circuit 9 produced by the FFT timing synchronizing circuit 8 and the phase rotation for each subcarrier will be described.

According to the principle of the cyclic shift of a fast Fourier transform (FFT), in a case where the signal following the FFT for the function $g[t]$ is $G[f]$, the signal following FFT of the function $g[t+\tau]_N$, obtained by subjecting the function $g[t]$ to a $\tau$ cyclic shift is given by the following formula.

$$G[f] \cdot \exp(-j2\pi f\tau / N) \qquad \cdots (1)$$

Here, N indicates the FFT size, and $f$ indicates the subcarrier number.

Accordingly, in a case where $\tau_n$ is the FFT timing for the nth OFDM symbol, and T is the ideal timing that accurately excludes the GI, the phase rotation indicated by the following equation is generated in the signal following FFT.

$$\exp\left(-j2\pi f(\tau_n - T)/N\right) \quad \cdots(2)$$

Thus, it is seen that in the OFDM receiver, a phase rotation caused by the FFT processing is generated in addition to the effects of the multi-path transmission path according to differences in the FFT extract position.

Furthermore, in regard to the improvement of the frequency phase characteristics appearing in the FFT processing results due to such differences in the FFT extract position, the invention described in Japanese Patent Application Laid-Open No. 2000-295195 is known as a conventional technique.

The conventional technique indicated in Japanese Patent Application Laid-Open No. 2000-295195 is characterized in that the primary slope of the frequency phase characteristics (slope of the phase rotation for each subcarrier) generated by the FFT processing is detected, and this primary slope is removed.

Here, if $h_n(f)$ is the channel transmission function in the transmission path for the pilot channel n, and $\sigma_n(f)$ is the noise component, then the channel estimation value at an FFT timing of $\tau_n$ is given by the following equation from Equations (1) and (2).

$$h'_n(f) = h_n(f) \cdot \exp\left(-j2\pi f(\tau_n - T)/N\right) + \sigma_n(f) \quad \cdots(3)$$

Thus, a phase rotation according to the FFT extract position is also generated in the channel estimation values determined from the pilot symbols.

Accordingly, when demodulation of the data symbols is performed, channel compensation must be performed using channel estimation values determined from pilots having the same FFT timing as the data symbols. As a result, the effects of the phase rotation caused by the FFT processing are also simultaneously compensated for, so that the data channels can be correctly demodulated.

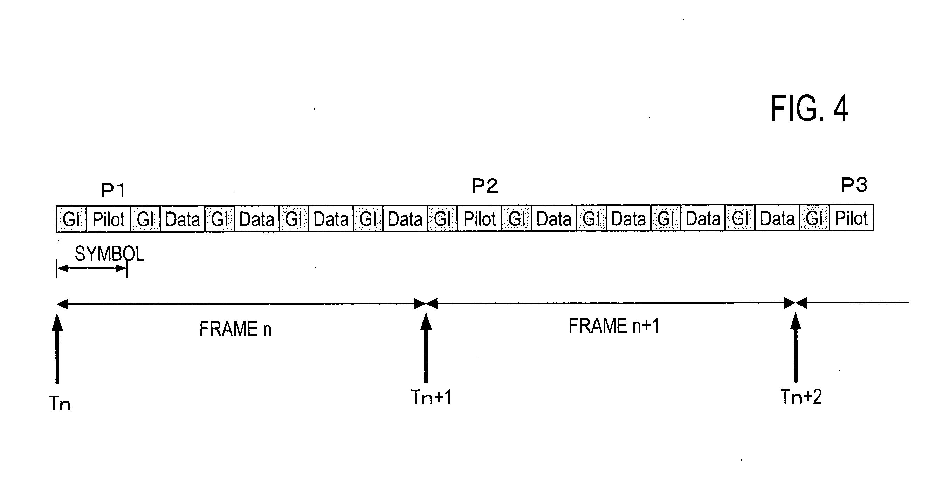

Fig. 4 shows an example of the frame structure used in the OFDM transmission system. Here, one frame is constructed from one pilot symbol and four data symbols.

The pilot symbols (P1, P2 and P3 in Fig. 4) are multiplexed at fixed intervals with respect to the data symbols. In the OFDM receiver, the optimal FFT timing is detected using the FFT timing synchronizing circuit 8, and this timing is updated with a certain determined period. In Fig. 4, Tn, Tn+1 and Tn+2 (the timing for the frame heads) are assumed to be the updated timing of the FFT extract positions.

Here, when the data symbols of a frame n are demodulated, it is envisioned that channel estimation values determined from pilot symbols within the same frame n are utilized. However, the present inventors took the view that it would be possible to improve the channel estimation precision by using not only pilot symbols within the frame n, but also pilot symbols of the adjacent frame n+1.

For example, in a case where $h'_n(f)$, $h'_{n+1}(f)$ are respectively the channel estimation values determined from the respective pilot symbols of frame n and frame n+1, the noise component can be suppressed by averaging these channel estimation values, so that the channel estimation precision can be improved.

Alternatively, in cases where the amount of channel fluctuation according to the Doppler effect based on the velocity of a moving body is large with respect to the frame length, channel estimation values at two data symbol positions can be accurately estimated by a linear interpolation of the respective channel estimation values.

However, in cases where an alteration of the FFT extract position is made between the frame n and frame n+1, the following problem may arise: namely, the averaging or linear interpolation of two channel estimation values may be impossible. Specifically, in cases where the FFT timing differs for a plurality of pilot symbols for which channel estimation is performed, the amount of phase variation of the channel estimation values differs; accordingly, the channel estimation values cannot be averaged or linearly interpolated "as is".

Specifically, where $\tau_n$, $\tau_{n+1}$ are respectively the FFT extract positions in the frame n and frame n+1, and $\sigma_n(f)$, $\sigma_{n+1}(f)$ are the noise components, the following equations are obtained from Equation (3).

$$h'_n(f) = h_n(f) \cdot \exp\left(-j2\pi f(\tau_n - T)/N\right) + \sigma_n(f) \quad \cdots(4)$$

$$h'_{n+1}(f) = h_{n+1}(f) \cdot \exp\left(-j2\pi f(\tau_{n+1} - T)/N\right) + \sigma_{n+1}(f) \cdots(5)$$

The channel estimation value $\overline{h}_n(f)$ obtained by averaging these is expressed by the following equation:

$$\overline{h}_n(f) = \frac{h'_n(f) + h'_{n+1}(f)}{2} + \frac{\sigma_n(f) + \sigma_{n+1}(f)}{2} \cdots (6)$$

Here, in cases where the FFT extract positions of the frame n and frame n+1 are equal, i.e., in cases where $\tau_n = \tau_{n+1}$, Equation (6) can be rewritten as follows:

$$\overline{h}_n(f) = \frac{h_n(f) + h_{n+1}(f)}{2} \cdot \exp\left(-j2\pi f(\tau_n - T)/N\right) + \frac{\sigma_n(f) + \sigma_{n+1}(f)}{2} \cdots (7)$$

In Equation (7), since the amounts of phase rotation in the two channel estimation values are equal, the channel estimation value following averaging, i.e., $\overline{h}_n(f)$ is the same as the amount of phase rotation for the data symbols.

On the other hand, in cases where the FFT extract positions of the frame n and frame n+1 are different, as is seen from Equations (4) through (6), the average is an average of channel estimation values that have different amounts of phase rotation; accordingly, this average cannot be used "as is" for the channel compensation of the data symbols.

Accordingly, it is desirable_____ to make it possible, in a receiver used in an orthogonal frequency division multiplexing (OFDM) transmission system, to use channel estimation values determined from pilot symbols for the channel compensation of data symbols even in cases where the FFT extract positions are different for the respective frames.

Embodiments of the present invention can allow the use of such channel estimation values not only in high-precision channel estimation, but also in Doppler frequency estimation, carrier frequency offset estimation, signal-to-noise power ratio (SIR: signal to interface power ratio) estimation and the like in an OFDM receiver by correcting the amount of phase rotation in accordance with differences in the FFT extract positions of the respective frames.

According to a first aspect, a receiver for orthogonal frequency division multiplexing transmission_____ comprises a receiver circuit which receives transmission frames constructed by a plurality of orthogonal frequency division multiplexing symbols, and converts these frames into a base band signal, a circuit which extracts individual symbols from the base band signal that is output from the receiver circuit, a fast Fourier transform circuit which performs a fast Fourier transform processing on the individual signals that are extracted, and outputs a plurality of subcarriers in a frequency domain, a channel estimating circuit which determines the correlation between pilot signals received at fixed intervals in the base band signal and a known pilot signal pattern, and determines a channel estimation value for each subcarrier, and a channel compensation circuit which compensates the output of the fast Fourier transform circuit for channel fluctuations by means of the channel estimation value, and is characterized in that this receiver further comprises a circuit which calculates the amount of phase rotation that is generated by the difference in timing at which the individual symbols are extracted as objects of the fast Fourier transform when the fast Fourier transform processing is performed by the fast Fourier transform circuit, and a circuit which corrects the amount of phase rotation for the channel estimation value determined by the channel estimating circuit.

Preferably, _____ a calculating circuit that adds and averages the channel estimation values determined from the plurality of symbols is further provided, and the compensation for the channel fluctuations in the channel compensation circuit is performed by means of the added and averaged channel estimation value.

Alternatively,_____ a calculating circuit that determines an interpolated value of the channel estimation values determined from the plurality of symbols is further provided, and the compensation for the channel fluctuations in the channel compensation circuit is performed by means of this.

Furthermore,_____ a calculating circuit that determines the dispersion of the channel estimation values determined from the plurality of symbols may be provided, and interference power contained in the received signals measured from the determined dispersion value.

As another possibility,_____ a calculating circuit that determines the phase deviation of the channel estimation values determined from the plurality of symbols may be provided, and the carrier frequency offset or Doppler frequency measured from the determined phase deviation.

In any case, preferably,_____,_____where the FFT timing of the symbols for a plurality of pilot symbols differs, the operation of the calculating circuit is stopped for the channel estimation values calculated from these pilot symbols.

A                         circuit that measures the frequency of alteration of the timing at which the individual symbols are extracted as objects of the fast Fourier transform may be provided, and in cases where the frequency of alteration of the timing is equal to or less than a specified threshold value, the operation of the circuit that calculates the amount of phase rotation and the circuit that corrects the amount of phase rotation is stopped.

Characterizing features of the present invention will become even clearer from embodiments of the present invention that are described below with reference to the attached figures.

As a result of the abovementioned characterizing construction of the present invention, the following effects are obtained.

First of all, since differences in the amount of phase rotation caused by deviation in the FFT extract position are corrected, the channel estimation values for several frames can be averaged and used; accordingly, the residual noise component can be suppressed (and the like), so that high-precision channel estimation is possible.

Secondly, since differences in the amount of phase rotation caused by deviation in the FFT extract position are corrected, the channel estimation value for an immediately preceding frame can be used for the demodulation of the next frame; accordingly, processing delay can be reduced so that fast data demodulation is possible.

Third, since differences in the amount of phase rotation caused by deviation in the FFT extract position are corrected, high-precision Doppler frequency estimation, carrier frequency offset estimation and SIR estimation are possible.

Reference is made, by way of example only, to the accompanying drawings in wich:

Fig. 1 is a diagram which shows an outline of an OFDM wireless transmission system;
Fig. 2 is a diagram which illustrates the guard interval (GI);
Fig. 3 is a diagram which illustrates the FFT extract timing;
Fig. 4 is a diagram showing an example of the frame structure used in an OFDM transmission system;
Fig. 5 is a diagram of an embodiment of the receiver used in the OFDM transmission system according to the present invention;
Fig. 6 is a diagram showing an example of a case in which the channel estimation value is averaged over three frames, as a concrete example of construction of Fig. 5;
Fig. 7 is a diagram showing the construction of an example developing the concrete example of Fig. 6; and
Fig. 8 is a diagram showing a concrete example of construction of Fig. 5 in a case where the dispersion value or phase deviation value is utilized.

Embodiments of the present invention will be described below. Furthermore, the embodiments are used to facilitate understanding of the present invention; the technical scope of the present invention is not limited to these embodiments.

Here, the principle of the present invention will be described prior to the description of the embodiments.

In the OFDM receiver, the FFT extract position detected by the FFT timing synchronizing circuit 8 and the timing at which the extract position is updated can be retained; accordingly, the following processing is performed on the basis of this information.

If the frame n is taken as a reference, then the phase is rotated by $\exp(-j2\pi f(\tau_n-\tau_{n+1})/N)\cdots(8)$, in relative terms between frame n and frame n+1.

Accordingly, the channel estimation value $h'_{n+1}(f)$ of the frame n+1 can be subjected to averaging processing after compensation is made for the phase rotation of Equation (8), and the following equation is obtained as a result.

$$\overline{h}_n(f) = \frac{h_n(f)+h_{n+1}(f)}{2}\cdot\exp\left(-j2\pi f(\tau_n-T)/N\right)+\frac{\sigma_n(f)+\sigma_{n+1}(f)\cdot\exp\left(j2\pi f(\tau_n-\tau_{n+1})/N\right)}{2}$$

$$\cdots(9)$$

If Equation (7) and Equation (9) are compared, it is seen that the averaging results for the channel estimation value are the same except for the noise component. Accordingly, these averaging results can be used for the compensation of the data channel of the frame n.

As was described above, the principle of the present invention is as follows: namely, a frame that acts as a reference is determined, the amount of relative phase rotation is calculated from the difference in the FFT extract position for this frame, and correction is made for this amount of relative phase rotation.

For example, in a case where the average value of the channel estimation values determined from the pilot symbols of the frame n and frame n+1 is used for the channel compensation of the data symbols of the frame n+1, the channel estimation value $h'_n(f)$ calculated by Equation (4) with the frame n+1 as a reference is corrected for the phase rotation of Equation (8).

As a result, in the example shown in Fig. 4, demodulation processing can be performed using the channel estimation values determined from the pilot symbols that precede the data symbols of the frame n+1 in terms of time; accordingly, data demodulation can be performed with little delay.

[Embodiments]

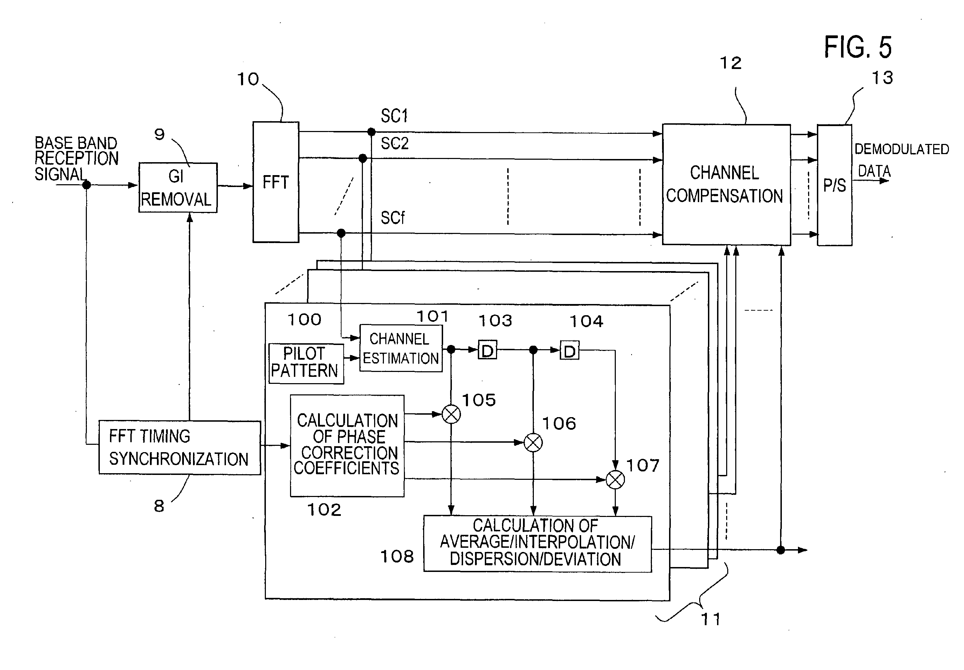

Fig. 5 shows the construction of an embodiment of the receiver in the OFDM transmission system according to the present invention. In Fig. 5, the receiver circuit(Rx) 7 is omitted, and only the portions constructed according to the characterizing features of the present invention are shown. Furthermore, the same reference numbers are assigned to parts that are the same as in Fig. 1. The same is true in other embodiments described later.

In Fig. 5, as a characterizing feature, the channel estimating part 11 has, for each subcarrier, a subcarrier handling part in which an existing pilot pattern storage part 100, a channel estimating circuit 101 that performs channel estimation based on the pilots, a phase correction coefficient calculating circuit 102 corresponding to the FFT timing, delay circuits 103 and 104, phase correction multiplying circuits 105 through 107, and a calculating circuit 108 that performs averaging, interpolation, dispersion or deviation calculations for the channel estimation values, are provided for the signals of the respective subcarriers following fast Fourier transform processing in the fast Fourier transform (FFT) circuit 10.

Fig. 5 shows in detail only the subcarrier handling part for one subcarrier among the plurality of subcarrier handling parts provided.

The channel estimating circuit 101 performs channel estimation for the pilot symbols, which are inserted at fixed intervals within the frame as shown in Fig. 4, by inputting both the signal second casing frame SCf of the $f$ subcarrier produced by FFT processing, and the existing pilot pattern for the $f$ subcarrier read out from the existing pilot storage part 100, and calculating the correlation value of these.

Specifically, in the OFDM receiver, where $r_n(f)$ is the signal following FFT of the pilot symbol of the nth frame, and $p(f)$ is the signal vector of the pilot symbol, the channel estimation value $h_n(f)$ can be determined by the calculation of the following Equation (10) in the channel estimating circuit 101.

$$h_n(f) = r_n(f) \cdot \frac{p^\star(f)}{|p(f)|^2} \quad \cdots (10)$$

Here, $f$ indicates the subcarrier number, i.e., channel estimation is performed for each subcarrier, and $p^*(f)$ indicates the complex conjugate of the pilot signal vector.

The channel estimation value $h_n(f)$ calculated by the channel estimating circuit 101 is respectively delayed by an amount equal to the pilot insertion interval in the delay circuits 103 and 104. As a result, processing that straddles a plurality of frames can be performed.

Meanwhile, information relating to the optimal FFT extract position for each frame detected by the FFT timing synchronizing circuit 8 is input, and in the phase correction coefficient calculating circuit 102, the phase correction coefficient used to correct the amount of phase rotation by which the channel estimation values for the respective frames are multiplied is calculated on the basis of Equation (8).

Then, as was described above, multiplication of the channel estimation values $h_n(f)$ for the respective frames output from the channel estimating circuit 101 and delay circuits 103 and 104 by the phase correction coefficient from the phase correction coefficient calculating circuit 102 is performed in the multipliers 105, 106 and 107, and the results are input into the calculating circuit 108 that performed averaging/interpolation/dispersion/deviation calculations.

In the calculating circuit 108, averaging/interpolation/dispersion/deviation calculations are performed on the outputs of the multipliers 105, 106 and 107 in accordance with the object of correction, and the results are output. Specifically, in cases where channel compensation is to be performed in the channel compensation circuit 12, the average or interpolated value is determined from the outputs of the multipliers 105, 106 and 107 in the calculating circuit 108, and the result is input into the channel compensation circuit 12 as the channel estimation value.

Furthermore, as will be described later, in cases where the interference power is calculated, and the object is adaptive link control of the transmission power, adaptive modulation or the like, the system is constructed so that the calculation result is determined as the dispersion value in the calculating circuit 108. Alternatively, in cases where the carrier frequency offset or the like that is used in detection in the receiver circuit 7 is determined, the system is constructed so that the calculation result is determined as the amount of phase fluctuation in the calculating circuit 108.

In cases where channel compensation is performed in the channel compensation circuit 12, this is performed for each subcarrier, and the signal $r_n(f)$ following FFT for the data symbols from the fast Fourier transform (FFT) circuit 10 is multiplied by the complex conjugate of the channel estimation value as shown in the following equation.

$$r_n(f) \cdot h_n^*(f) \quad \cdots (11)$$

The signal following the channel compensation of Equation (11) is converted into a series signal by the P/S converter circuit 13, and is output as demodulated data.

As was described above, the OFDM receiver of the present invention is characterized by the fact that a phase correction coefficient calculating circuit 102 and phase correction coefficient multiplying circuits 105 through 107 are provided; existing circuits can be used as the channel estimating circuit 101 and as the calculating circuit 108 that determines the average, interpolation, dispersion or deviation.

Furthermore, the phase correction coefficients are calculated by the phase correction coefficient calculating circuit 102 on the basis of Equation (8); since $f$, $\tau_n$, $N$ are all integers, the types of the correction coefficients are limited to N types, which are the FFT size. Accordingly, N types of correction coefficients are calculated beforehand, and these coefficients can be stored in a memory provided in the phase correction coefficient calculating circuit 102, and utilized. In this way, an increase in the circuit scale caused by the present invention can be prevented.

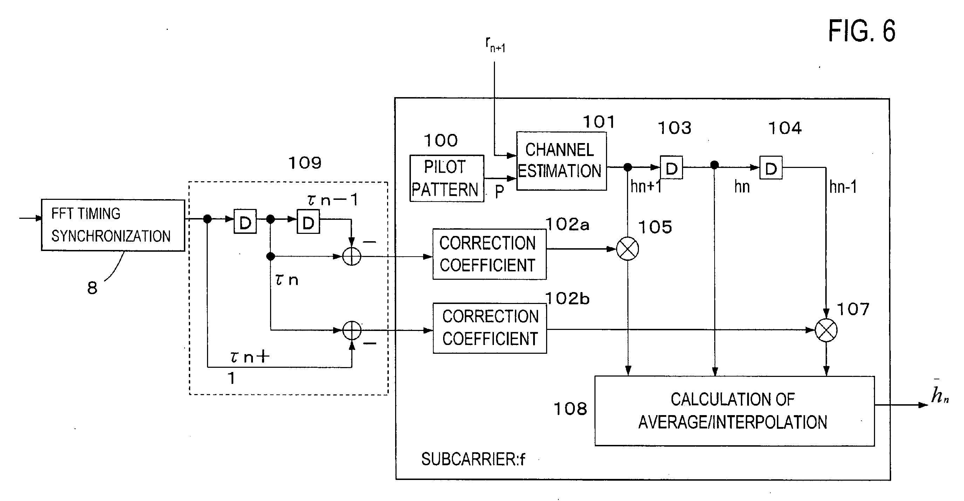

Fig. 6 is a diagram showing an embodiment in which the channel estimation values are averaged over three frames, as a concrete example of construction of Fig. 5.

Here, the calculating circuit 108 has a calculation function that determines the average or interpolation, and averaging processing is centered on the channel estimation value $h_n(f)$ of the nth frame; accordingly, the phase correction is performed only for $h_{n-1}(f)$ and $h_{n+1}(f)$. Accordingly, multipliers 105 and 107 corresponding to the correction coefficient generating circuits 102a and 102b for $h_{n-1}(f)$ and $h_{n+1}(f)$ are provided.

A circuit 109 which generates a timing of $(\tau_n - \tau_{n-1})$ and a timing of $(\tau_n - \tau_{n+1})$ is disposed between these circuits and the FFT timing synchronizing circuit 8, and the correction coefficient generating circuits 102a and 102b input such an FFT timing, and determine the phase correction coefficients for the respective corresponding channel estimation values in accordance with Equation (8) as shown in the following Equations (12) and (13).

$$\exp\left(j2\pi f(\tau_n - \tau_{n-1})/N\right) \quad \text{(correction coefficient for } h_{n-1}(f)) \cdots (12)$$

$$\exp\left(j2\pi f(\tau_n - \tau_{n+1})/N\right) \quad \text{(correction coefficient for } h_{n+1}(f)) \cdots (13)$$

Accordingly, the calculating circuit 108 determines the average value of the channel estimation values by means of the following equation as a circuit, that calculates the average/interpolation over three frames.

$$\overline{h}_n(f) = \frac{h_{n-1}(f) \cdot \exp(j2\pi f(\tau_n - \tau_{n-1})/N) + h_n(f) + h_{n+1}(f) \cdot \exp(j2\pi f(\tau_n - \tau_{n+1})/N)}{3}$$

$$\cdots (14)$$

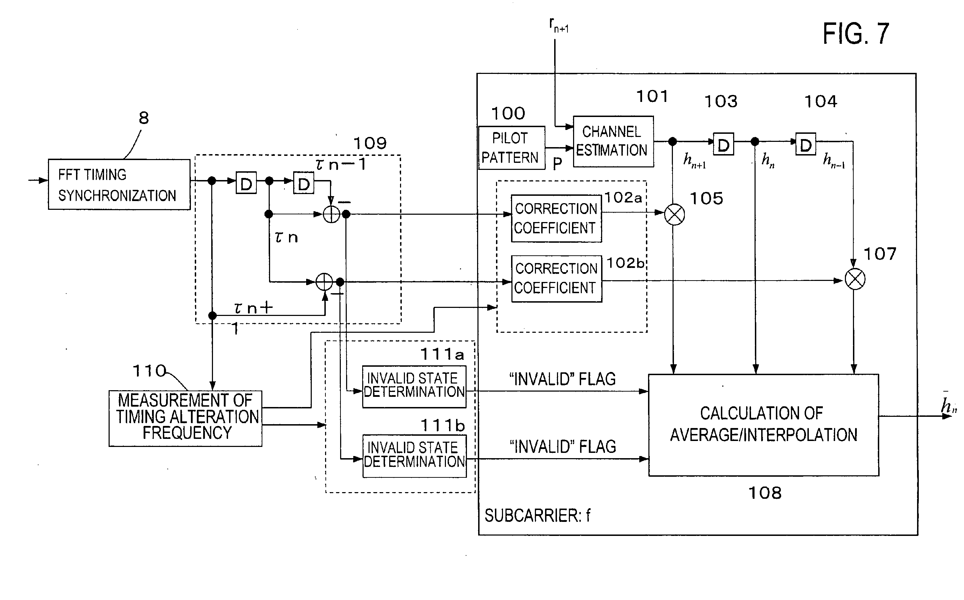

Fig. 7 shows the construction of an example that further develops the concrete example shown in Fig. 6. In the example shown in Fig. 7, the system is constructed so that in cases where the FFT timing of the symbols for a plurality of pilot symbols differs, the operation of the abovementioned calculating circuit 108 is stopped for the channel estimation values calculated from the respective pilot symbols.

Accordingly, in Fig. 7, invalid status determining circuits 111a and 111b and a timing alteration frequency measuring circuit 110 are further provided in the construction example shown in Fig. 6. The invalid status determining circuits 111a and 111b determine cases where the symbol FFT timing is different for two object pilot symbols,

Specifically, in Fig. 7, in cases where the average value of the channel estimation values straddling three or more frames is calculated, a flag indicating an invalid state is output only for the channel estimation values of frames whose FFT extract position differs from the FFT extract position of the reference frame, so that channel estimation values whose FFT extract positions are equal are selected and averaged. As a result, high-precision channel estimation can be performed.

Specifically, in cases where the FFT extract positions differ between frames, "invalid" flags are output from invalid state determining circuits 112a and 112b, so that in the calculating circuit 108, averaging or interpolation calculation processing for the outputs of the multipliers 105 and 107 is made invalid. As a result, deterioration of the calculation processing due to phase rotation caused by the FFT processing can be prevented.

Furthermore, in the description based on equations, a case in which the FFT timing is as follows is considered. $\tau_n = \tau_{n-1}$, $\tau_n \neq \tau_{n-1}$

In this case, the averaging processing of the (n+1)th frame is made invalid by the "invalid" flag of the invalid state determining circuit 111a, so that the calculating circuit 108 considers only cases in which $\tau_n = \tau_{n-1}$ to be valid, and as indicated in the following equation, calculates the average value of the channel estimation values as shown in the following equation.

$$\overline{h}_n(f) = \frac{h_{n-1}(f) + h_n(f)}{2} \quad \cdots (15)$$

Furthermore, if the following conditions apply, $\tau_n \neq \tau_{n-1}$, $\tau_n \neq \tau_{n+1}$, then the averaging processing of the channel estimation values is made invalid by the "invalid" flags of the invalid state determining circuits 111a and 111b, and the calculating circuit 108 outputs the channel estimation values $h_n(f)$ "as is" for use in channel compensation as indicated by the following equation.

$$\overline{h}_n(f) = h_n(f) \quad \cdots (16)$$

Furthermore, in Fig. 7, in cases where the frequency at which changes in the FFT timing occur is small, the system is controlled so that the calculation of the phase correction coefficients by the correction coefficient calculating circuits 102a and 102b and the operation of the phase correction circuit that operates the multipliers 105 and 107 are stopped. As a result, power consumption can be reduced.

A timing alteration frequency measuring circuit 110 is provided for this control; this circuit measures the mean frequency with which alteration of the FFT timing occurs, i.e., the number of frames for which alteration of the FFT timing occurs once.

In cases where the measured FFT timing alteration frequency is equal to or less than a specified value, the calculation of the phase correction coefficients by the phase correction coefficient calculating circuits 102a and 102b and the phase correction operation that operates the multipliers 105 and 107 are stopped.

Since the phase correction coefficient calculating circuits 102a and 102b and multiplying circuits 105 and 107 that perform the phase correction operation are present for each subcarrier, stopping the operation of these circuits reduces the load on the circuits so that the power consumption can be reduced. This is handled by stopping the phase correction operation on the one hand, and invalidating the channel estimation processing in cases where the FFT timing is altered.

Here, a further application of the present invention will be investigated. In the respective examples described above, it was indicated that the average of the channel estimation values for a plurality of frames was determined by the calculating circuit 108, and that this was used for channel compensation.

However, the application of the present invention is not limited to such cases. Specifically, in the calculating circuit 108, it is also possible to perform calculations that determine the dispersion value or phase deviation value using the channel estimation values $h'_n(f)$, $h'_{n+1}(f)$ of the frame n and frame n+1, and to calculate the interference power on the basis of the dispersion value, or to calculate the carrier frequency offset or Doppler frequency on the basis of the phase deviation.

Specifically, the interference power contained in the reception signal can be measured from the dispersion of the channel estimation values, and adaptive link control such as transmission power control, adaptive modulation or the like can be performed on the basis of the results obtained.

Furthermore, the amount of phase fluctuation in the time direction can be measured from the phase deviation of the channel estimation values, and the carrier frequency offset used in detection in the receiver circuit(Rx) 7, or the Doppler frequency corresponding to the relative speed of the mobile body and the base station, can be estimated. As a result, carrier frequency offset compensation by AFC (automatic frequency control) and adaptive link control based on the measured value of the Doppler frequency can be performed.

A case in which the dispersion value is utilized will be described in detail below.

The dispersion $I_n(f)$ of the channel estimation value in the subcarrier $f$ of the frame n is expressed as follows. Furthermore, the notation of the noise component is omitted below.

$$I_n(f) = \frac{1}{2} \left| h'_{n+1}(f) - h'_n(f) \right|^2 \cdots (17)$$

When Equation (4) and Equation (5) are substituted into this, the following equation is obtained.

$$I_n(f) = \frac{1}{2} \left| h_{n+1}(f) \cdot \exp(-j2\pi f(\tau_{n+1} - T)/N) - h_n(f) \cdot \exp(-j2\pi f(\tau_n - T)/N) \right|^2 \quad \cdots (18)$$

Accordingly, in cases where $\tau_n$ and $\tau_{n+1}$ are different, the difference in the phase rotation caused by the FFT processing is included, so that the dispersion value cannot be accurately determined.

Accordingly, in the present invention, the dispersion is determined after correcting the phase rotation of Equation (8) for the channel estimation value $h'_{n+1}(f)$. As a result, calculation can be performed as indicated by the following equation, so that the dispersion value (interference power) can be accurately determined.

$$I_n(f) = \frac{1}{2} \left| h'_{n+1}(f) \cdot \exp(-j2\pi f(\tau_n - \tau_{n+1})/N) - h'_n(f) \right|^2 = \frac{1}{2} \left| h_{n+1}(f) - h_n(f) \right|^2 \cdots (19)$$

Furthermore, a case where the phase deviation is utilized will be described below in terms of equations.

The phase deviation $\theta_n(f)$ of the channel estimation value in the subcarrier $f$ of the frame n is expressed as follows:

$$\theta_n(f) = \angle h'_{n+1}(f) - \angle h'_n(f) = \tan^{-1}\left( \frac{\mathrm{Im}[h'_{n+1}(f)]}{\mathrm{Re}[h'_{n+1}(f)]} \right) - \tan^{-1}\left( \frac{\mathrm{Im}[h'_n(f)]}{\mathrm{Re}[h'_n(f)]} \right) \quad \cdots (20)$$

When Equation (4) and Equation (5) are substituted into this equation, the following equation is obtained.

$$\theta_n(f) = \angle h'_{n+1}(f) - \angle h'_n(f) = \angle h_{n+1}(f) - \angle h_n(f) - 2\pi f(\tau_{n+1} - \tau_n)/N \cdots (21)$$

Accordingly, in cases where $\tau_n$ and $\tau_{n+1}$ are different, the difference in the phase rotation caused by the FFT processing is included, so that the dispersion value cannot be accurately determined.

Accordingly, in the present invention, the dispersion is determined after correcting the phase rotation of Equation (8) for the channel estimation value $h'_{n+1}(f)$. As a result, calculation can be performed as indicated by the following equation, so that the dispersion value (interference power) can be accurately determined.

$$\theta_n(f) = \angle h'_{n+1}(f) \cdot \exp(-j2\pi f(\tau_n - \tau_{n+1})/N) - \angle h'_n(f) = \angle h_{n+1}(f) - \angle h_n(f) \cdots (22)$$

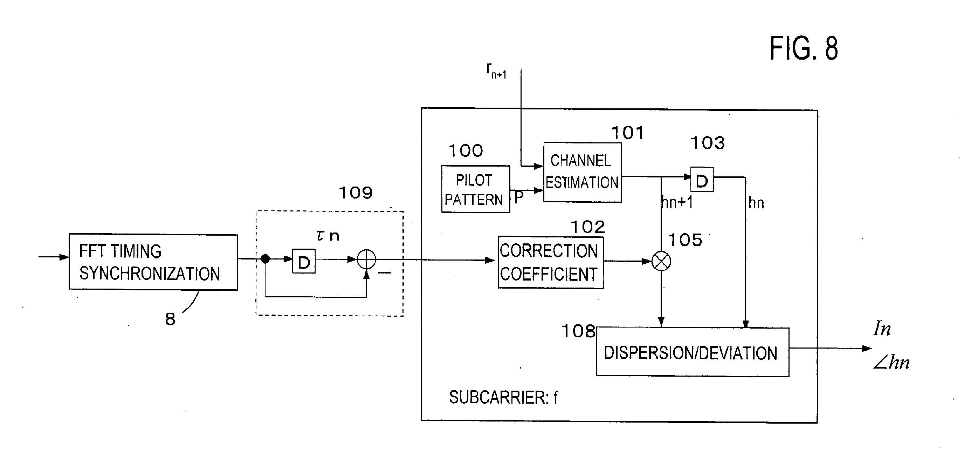

Fig. 8 shows a concrete example of construction of Fig. 5 for a case in which the dispersion value or phase deviation value is utilized. In this concrete example, processing is performed over two frames; in the calculating circuit 108, processing that determines the dispersion or amount of phase deviation is performed for the channel estimation values.

Specifically, to describe the construction shown in Fig. 8 for a case in which the dispersion value is utilized, a circuit 109 that generates the timing of $(\tau_n - \tau_{n+1})$ is disposed between the FFT timing synchronizing circuit 8 and the correction coefficient calculating circuit 102, and the correction coefficient calculating circuit 102 inputs this FFT timing and determines the phase correction coefficient for the corresponding channel estimation value $h_{n+1}(f)$ according to Equation (8); then, the dispersion is determined after the phase rotation is corrected by the multiplier 105. As a result, the calculating circuit 108 can calculate the abovementioned Equation (19), and can accurately determine the dispersion value (interference power).

Similarly, to describe a case in which the phase deviation is utilized in Fig. 8, the correction coefficient calculating circuit 102 inputs the FFT timing from the circuit 109 that generates this timing, and determines the phase correction coefficient for the corresponding channel estimation value $h_{n+1}(f)$ according to Equation (8); then, the amount of phase deviation is determined after the phase rotation is corrected by the multiplier 105. As a result, the calculating circuit 108 can calculate the abovementioned equation (22), and the amount of phase deviation according to the propagation path can be accurately determined.

Furthermore, in the example construction shown in the abovementioned Fig. 8, the system can also be constructed so that in cases where the FFT timing of the symbols for a plurality of pilot symbols differs, the operation of the abovementioned calculating circuit 108 is stopped for the channel estimation values calculated from these pilot symbols as described with reference to Fig. 7. Furthermore, it is also possible to control the system so that in cases where the frequency with which alterations of the FFT timing occur is small, the calculation of the phase correction coefficients by the correction coefficient generating circuits 102 and the operation of the phase correction circuit that operates the multiplying circuits 105 are stopped.

As was described in the abovementioned examples, the conventional technique indicated in Japanese Patent Application Laid-Open No. 2000-295195 is characterized in that the primary slope of the frequency-phase characteristics generated by the FFT processing (the slope of the phase rotation for each subcarrier) is detected, and the primary slope is removed.

On the other hand, the present invention is characterized by the following: namely, the amount of phase rotation caused by the shifting of the FFT extract position from the normal time position is not removed; instead, in cases where a difference is generated in the FFT extract position between different symbols, the amount of relative phase rotation caused by this is corrected.

In particular, in a multi-path environment in wireless communications, since the deviation from the normal position is different for each path, the effects of this deviation cannot be completely eliminated. In the present invention, it is assumed that the optimal FFT timing in the multi-path environment is detected in the FFT timing synchronizing circuit 8, and that the FFT extract processing is performed normally.

Furthermore, the amount of phase rotation caused by the FFT processing differs for each path; however, the amount of relative phase rotation that is generated by the differences in the FFT extract position is the same as long as there is no fluctuation of the multi-path state. Accordingly, the present invention can be applied "as is" even in a multi-path environment.

**Claims**

**1.**  A receiver for orthogonal frequency division multiplexing signals comprising:

a receiver circuit which receives transmission frames constructed by a plurality of orthogonal frequency division multiplexing symbols, and converts the transmission frames into a base band signal;
a circuit which cuts out individual symbols from the base band signal that is output from the receiver circuit;
a fast Fourier transform circuit which performs a fast Fourier transform processing on the individual symbols that are extracted, and outputs a plurality of subcarriers in a frequency domain;
a channel estimating circuit which determines the correlation between pilot signals received at fixed intervals in the base band signal and a known pilot signal pattern, and determines a channel estimation value for each subcarrier; and
a channel compensation circuit which compensates the output of the fast Fourier transform circuit for channel fluctuations by means of the channel estimation value

**characterized in that** the receiver further comprises:

a circuit which calculates the amount of phase rotation that is generated by the difference in timing at which the individual symbols are extracted as objects of the fast Fourier transform when the fast Fourier transform processing is performed by the fast Fourier transform circuit; and
a circuit which corrects the amount of phase rotation for the channel estimation value determined by the channel estimating circuit.

2. The receiver for orthogonal frequency division multiplexing signals according to claim 1, further comprising a calculating circuit that adds and averages the channel estimation values determined from the plurality of symbols, wherein the compensation for the channel fluctuations in the channel compensation circuit is performed by means of the added and averaged channel estimation value.

3. The receiver for orthogonal frequency division multiplexing signals according to claim 1, further comprising a calculating circuit that determines an interpolated value of the channel estimation values determined from the plurality of symbols, wherein the compensation for the channel fluctuations in the channel compensation circuit is performed by means of this interpolated value.

4. The receiver for orthogonal frequency division multiplexing signals according to claim 1, 2, or 3, further comprising a calculating circuit that determines the dispersion of the channel estimation values determined from the plurality of symbols, wherein interference power contained in the received signals is measure from the determined dispersion value.

5. The receiver for orthogonal frequency division multiplexing signals according to claim 1, 2, 3, or 4, further comprising a calculating circuit that determines the phase deviation of the channel estimation values determined from the plurality of symbols, wherein the carrier frequency offset or Doppler frequency is measured from the determined phase deviation.

6. The receiver for orthogonal frequency division multiplexing signals of any of claims 2 to 5, wherein in cases where the FFT extract timing of the symbols for a plurality of pilot symbols differs, the operation of the calculating circuit is stopped for the channel estimation values calculated from these pilot symbols.

7. The receiver for orthogonal frequency division multiplexing signals according to any of claims 2 to 6, further comprising a circuit that measures the frequency of alteration of the timing at which the individual symbols are extracted as objects of the fast Fourier transform, wherein in cases where the frequency of alteration of the timing is equal to or less than a specified threshold value, the operation of the circuit that calculates the amount of phase rotation and the circuit that corrects the amount of phase rotation is stopped.

FIG. 1

DATA →
PLT →
1 S/P
2 IFFT
3 GI INSERTION
4 Tx
5

6
7 Rx
9 GI REMOVAL
10 FFT
12 CHANNEL COMPENSATION
13 P/S → DEMODULATED DATA

8 FFT TIMING SYNCHRONIZATION

11 CHANNEL ESTIMATION

EP 1 737 173 A2

12

EP 1 737 173 A2

FIG. 2

| GI | IFFT DATA |
|----|-----------|

FIG. 3

Tg

a  MAIN WAVE

| GI | IFFT DATA |
|----|-----------|

b  DELAYED WAVE

| GI | IFFT DATA |
|----|-----------|

FFT EXTRACT POSITION

FFT PROCESSING

FIG. 4

P1             P2             P3

| GI | Pilot | GI | Data | GI | Data | GI | Data | GI | Data | GI | Pilot | GI | Data | GI | Data | GI | Data | GI | Data | GI | Pilot |

SYMBOL

FRAME n                  FRAME n+1

$T_n$                     $T_{n+1}$              $T_{n+2}$

EP 1 737 173 A2

FIG. 5

FIG. 6

SUBCARRIER:f

EP 1 737 173 A2

16

FIG. 7

FIG. 8

SUBCARRIER: f

$r_{n+1}$

100 PILOT PATTERN P

101 CHANNEL ESTIMATION

103 D

$h_{n+1}$ $h_n$

102 CORRECTION COEFFICIENT

105

108 DISPERSION/DEVIATION

$I_n$

$\angle h_n$

109

$\tau_n$

D

FFT TIMING SYNCHRONIZATION

8

EP 1 737 173 A2

18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005179093 A

- JP 2000295195 A